# FASCICULE DE BREVET EUROPEEN

(11) **EP 2 912 598 B1**
(45) Date de publication et mention de la délivrance du brevet: **31.07.2019**
(21) Numéro de dépôt: 13780132.0
(22) Date de dépôt: 22.10.2013
(51) Int. Cl.: G06F 21/57

(54) **PROCÉDÉ DE TÉLÉCHARGEMENT D'AU MOINS UN COMPOSANT LOGICIEL DANS UN APPAREIL INFORMATIQUE, PRODUIT PROGRAMME D'ORDINATEUR, APPAREIL INFORMATIQUE ET SYSTÈME INFORMATIQUE ASSOCIÉS**
VERFAHREN ZUM HERUNTERLADEN VON MINDESTENS EINER SOFTWAREKOMPONENTE AUF EINE COMPUTERVORRICHTUNG SOWIE ZUGEHÖRIGES COMPUTERPROGRAMMPRODUKT, COMPUTERVORRICHTUNG UND COMPUTERSYSTEM
METHOD FOR DOWNLOADING AT LEAST ONE SOFTWARE COMPONENT ONTO A COMPUTING DEVICE, AND ASSOCIATED COMPUTER PROGRAM PRODUCT, COMPUTING DEVICE AND COMPUTER SYSTEM

(30) Priorité: 23.10.2012 FR 1202824
(43) Date de publication de la demande: 02.09.2015
(73) Titulaire: THALES, 92200 Neuilly-sur-Seine (FR)
(72) Inventeur: ECH-CHERGUI, Ben Youcef, F-49309 Cholet (FR); DEROUET, Ludovic, F-49309 Cholet (FR)
(74) Mandataire: Lavoix
(86) Numéro de dépôt international: PCT/EP2013/072057
(87) Numéro de publication internationale: WO 2014/064096

(56) Documents cités:
- US-A1- 2008 170 696
- US-A1- 2012 210 443

## Description

La présente invention concerne un procédé de téléchargement d'au moins un composant logiciel dans un appareil informatique, tel qu'un téléphone mobile, le procédé étant mis en oeuvre par l'appareil informatique comprenant une unité de traitement d'informations comportant une mémoire,
le procédé de téléchargement comprenant les étapes suivantes :
- le téléchargement dans la mémoire d'une première application depuis un premier moyen de distribution,
- la connexion, via la première application, à un deuxième moyen de distribution.

L'invention concerne également un produit programme d'ordinateur comportant des instructions logicielles qui, lorsque mis en oeuvre par une unité de traitement d'informations intégrée à un appareil informatique, met en oeuvre un tel procédé de téléchargement.

L'invention concerne également un appareil informatique, tel qu'un téléphone mobile, comprenant une unité de traitement d'informations comportant une mémoire, la mémoire comportant une application de téléchargement d'au moins un composant logiciel,
l'application de téléchargement comportant :
+ un premier moyen de téléchargement d'une première application dans la mémoire depuis un premier moyen de distribution, la première application étant propre à se connecter à un deuxième moyen de distribution.

L'invention concerne également un système informatique comprenant un tel appareil informatique.

On connaît un appareil informatique, tel qu'un terminal mobile, géré par une plateforme Android hébergeant des applications. La plateforme Android comporte un noyau Linux (de l'anglais *Linux Kernel*)*,* un ensemble de bibliothèques de fonctions en langage C ou C++, et une machine virtuelle Dalvik (de l'anglais *Dalvik Virtual Machine*) propre à exécuter les applications hébergées par la plateforme Android.

Pour le téléchargement d'un ou plusieurs composants logiciels, il est connu d'utiliser le système Google Play® ou encore un serveur public, afin de télécharger une première application, la première application étant adaptée pour se connecter ensuite à un serveur dédié afin de télécharger le ou les composants logiciels.

Toutefois, un tel téléchargement n'est pas très sécurisé, et il est notamment possible de corrompre la communication avec le serveur dédié. En outre, le téléchargement requiert de posséder un compte Google® pour télécharger la première application, ce qui est difficilement compatible avec certaines utilisations, telles que le déploiement de composants logiciels au sein d'un parc informatique d'une entreprise.

US 2008/0170696 A1 décrit un procédé de téléchargement d'au moins un composant logiciel. Le procédé comprend le téléchargement d'un paquetage contenant un composant logiciel depuis une plate-forme de téléchargement, la décompression du paquetage téléchargé avec décodage d'une signature électronique à l'aide d'une clé.

Un but de l'invention est donc de proposer un procédé de téléchargement d'au moins un composant logiciel permettant d'améliorer la sécurité du ou des composants logiciels, tout en facilitant la mise en oeuvre dudit téléchargement.

À cet effet, l'invention a pour objet un procédé de téléchargement selon la revendication 1.

Suivant d'autres aspects avantageux de l'invention, le procédé est selon l'une quelconque des revendications dépendantes 2 à 8.

L'invention a également pour objet un produit programme d'ordinateur selon la revendication 9.

L'invention a également pour objet un appareil informatique selon la revendication 10.

L'invention a également pour objet un système informatique selon la revendication 11.

Suivant un autre aspect avantageux de l'invention, le système informatique est selon la revendication 12.

Ces caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'un système informatique selon l'invention, comprenant un appareil informatique, un premier serveur de distribution, un deuxième serveur de distribution et un troisième serveur de distribution, chaque serveur de distribution étant relié à l'appareil informatique,
- la figure 2 est un organigramme d'un procédé de déploiement avec création d'un premier référentiel sur le deuxième serveur de distribution et création d'un deuxième référentiel sur le troisième serveur de distribution, et
- la figure 3 est un organigramme d'un procédé de téléchargement, selon l'invention, d'au moins un composant logiciel dans l'appareil informatique.

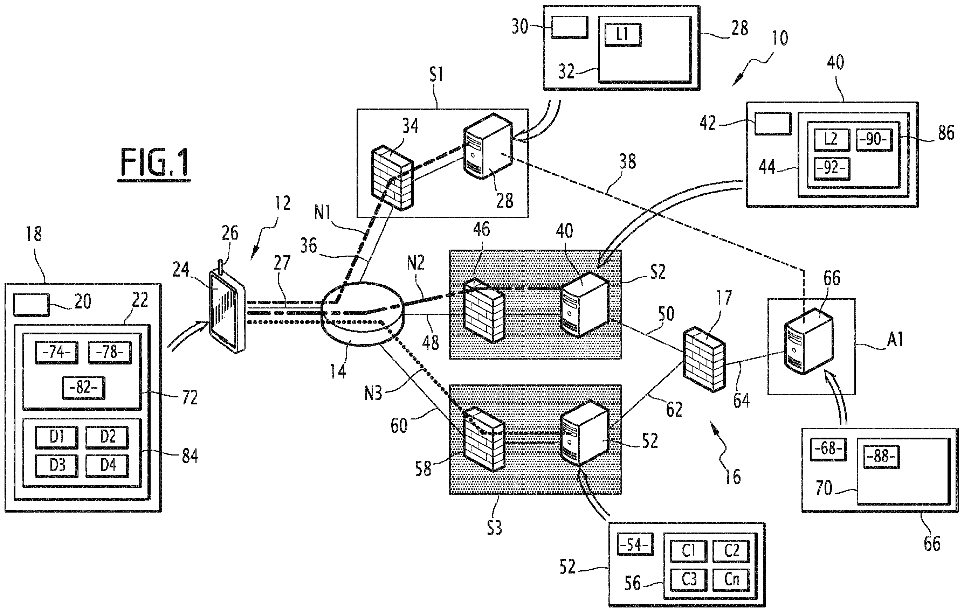

Sur la figure 1, un système informatique 10 comprend au moins un appareil informatique 12, tel qu'un terminal mobile, un premier moyen de distribution S1, un deuxième moyen de distribution S2 et un troisième moyen de distribution S3, chaque moyen de distribution S1, S2, S3 étant relié à l'appareil informatique 12 via un réseau public 14, tel que le réseau Internet.

Le système informatique 10 comprend de préférence une pluralité d'appareils informatiques 12, un seul appareil informatique 12 étant représenté sur la figure 1 par souci de simplification, chaque appareil informatique 12 étant relié aux premier, deuxième et troisième moyens de distribution S1, S2, S3 via le réseau public 14.

En complément, le système informatique 10 comprend un moyen de déploiement A1 relié aux deuxième et troisième moyens de distribution S2, S3 via un réseau privé 16 comportant une première barrière de sécurité 17 (de l'anglais *firewall*).

L'appareil informatique 12 comprend une première unité de traitement d'informations 18, formée par exemple d'un premier processeur 20 et d'une première mémoire 22 associée au premier processeur, et un écran 24.

Dans l'exemple de réalisation de la figure 1, l'appareil informatique 12 est un téléphone mobile, et comprend en outre une antenne radioélectrique 26 et un émetteur-récepteur radioélectrique, non représenté, connecté à la première unité de traitement d'informations 18.

L'appareil informatique 12 est relié au réseau public 14 à l'aide d'une première liaison de données 27, telle qu'une liaison radioélectrique de données.

Le téléphone mobile 12 est, par exemple, un ordiphone (de l'anglais *smartphone*), et est géré par un système d'exploitation, tel que le système d'exploitation Android de la société Google®.

Le premier moyen de distribution S1 est, par exemple, un serveur informatique, et comporte une deuxième unité de traitement d'informations 28, formée par exemple d'un deuxième processeur 30 et d'une deuxième mémoire 32 associée au deuxième processeur. Le premier serveur de distribution S1 est, par exemple, un serveur à accès public.

En complément, le premier serveur de distribution S1 comporte une deuxième barrière de sécurité 34 (de l'anglais *firewall*) pour éviter des attaques en déni de service, la deuxième barrière de sécurité 34 étant connectée entre la deuxième unité de traitement d'informations 28 et le réseau public 14. Le premier serveur de distribution S1 présente un premier niveau de sécurité N1.

Le premier serveur de distribution S1 est relié au réseau public 14 à l'aide d'une deuxième liaison de données 36. Il est en complément susceptible d'être relié au moyen de déploiement A1 à l'aide d'une troisième liaison de données 38 lors du déploiement des applications dans lesdits référentiels.

Le deuxième moyen de distribution S2 est, par exemple, un serveur informatique et comporte une troisième unité de traitement d'informations 40, formée par exemple d'un troisième processeur 42 et d'une troisième mémoire 44 associée au troisième processeur.

Le deuxième serveur de distribution S2 comporte une troisième barrière de sécurité 46 connectée entre la troisième unité de traitement d'informations 40 et le réseau public 14.

Le deuxième serveur de distribution S2 présente un deuxième niveau de sécurité N2. Le deuxième niveau de sécurité N2 est supérieur au premier niveau de sécurité N1, le deuxième serveur de distribution S2 assurant une fonction d'authentification des connexions et une fonction de protection cryptographique des échanges de données, comme cela sera décrit plus en détail par la suite.

Le deuxième serveur de distribution S2 est relié au réseau public 14 à l'aide d'une quatrième liaison de données 48, telle qu'une liaison filaire de données. Le deuxième serveur de distribution S2 est relié à la première barrière de sécurité 17 du réseau privé à l'aide d'une cinquième liaison de données 50.

Le troisième moyen de distribution S3 est, par exemple, un serveur informatique et comporte une quatrième unité de traitement d'informations 52, formée par exemple d'un quatrième processeur 54 et d'une quatrième mémoire 56 associée au quatrième processeur.

Le troisième serveur de distribution S3 comporte une quatrième barrière de sécurité 58 connectée entre la quatrième unité de traitement d'informations 52 et le réseau public 14.

Le troisième serveur de distribution S3 présente un troisième niveau de sécurité N3. Le troisième niveau de sécurité N3 est de préférence supérieur au deuxième niveau de sécurité N2, le troisième serveur de distribution S3 assurant une fonction d'authentification forte des connexions et une fonction de protection cryptographique des échanges de données, comme cela sera décrit plus en détail par la suite. Le troisième niveau de sécurité N3 est supérieur au premier niveau de sécurité N1.

Le niveau de sécurité sera ainsi différent selon que l'appareil informatique 12 est connecté au premier serveur de distribution S1, au deuxième serveur de distribution S2 ou encore au troisième serveur de distribution S3, comme représenté sur la figure 1 par les différentes lignes brisées en traits mixtes, associées aux différents niveaux de sécurité N1, N2, N3. Dans l'exemple de réalisation de la figure 1, la connexion au premier serveur de distribution S1 représentée par la ligne N1 est une connexion sans authentification, la connexion au deuxième serveur de distribution S2 représentée par la ligne N2 est une connexion chiffrée avec une authentification simple, et la connexion au troisième serveur de distribution S3 représentée par la ligne N3 est une connexion chiffrée avec une authentification de manière cryptographique.

Le troisième serveur de distribution S3 est relié au réseau public 14 à l'aide d'une sixième liaison de données 60, telle qu'une liaison filaire de données. Le troisième serveur de distribution S3 est relié à la première barrière de sécurité 17 du réseau privé à l'aide d'une septième liaison de données 62.

Le troisième serveur de distribution S3 est, par exemple, destiné à être relié au système d'information d'une entreprise souhaitant mettre en oeuvre le téléchargement du ou des composants logiciels C1, C2, C3 dans une flotte d'appareils informatiques 12 utilisés par les employés de l'entreprise.

Dans l'exemple de réalisation de la figure 1, les premiers, deuxième et troisième serveurs de distribution S1, S2, S3 sont des serveurs informatiques distincts les uns des autres. En variante non représentée, le deuxième moyen de distribution S2 et le troisième moyen de distribution S3 sont intégrés dans un même serveur informatique distinct du premier serveur de distribution S1, les deuxième et troisième moyens de distribution S2, S3 étant d'accès privé, alors que le premier moyen de distribution S1 est d'accès public.

Le moyen de déploiement A1 est propre à requérir la création de référentiels auprès des deuxième et troisième moyens de distribution S2, S3 et à déployer des applications dans lesdits référentiels.

Le moyen de déploiement A1 est relié à la première barrière de sécurité 17 du réseau privé à l'aide d'une huitième liaison de données 64, et comporte une cinquième unité de traitement d'informations 66, formée par exemple d'un cinquième processeur 68 et d'une cinquième mémoire 70 associée au cinquième processeur.

La première mémoire 22 est apte à stocker une application 72 de téléchargement d'au moins un composant logiciel C1, C2, C3 dans la mémoire de l'appareil informatique 12. L'application de téléchargement 72 comporte un premier moyen 74 de téléchargement d'une première application L1 dans la première mémoire 22 et depuis le premier serveur de distribution S1, la première application L1 étant propre à se connecter, de manière sécurisée à l'aide d'un code d'authentification, au deuxième serveur de distribution S2.

La première mémoire 22 est également apte à stocker un deuxième moyen 78 de téléchargement d'une deuxième application L2 dans la première mémoire 22 et depuis le deuxième serveur de distribution S2, la deuxième application L2 étant propre à se connecter de manière sécurisée au troisième serveur de distribution S3. Le premier moyen de téléchargement 7 et le deuxième moyen de téléchargement 78 sont, par exemple, réalisés sous forme de fonctions logicielles intégrées dans l'application de téléchargement 72, comme représenté sur la figure 1.

En variante, la première application L1 forme le deuxième moyen de téléchargement 78, la première application L1 étant adaptée pour effectuer directement le téléchargement de la deuxième application L2 depuis le deuxième serveur de distribution S2. Cette variante est préférentielle car elle permet de faciliter davantage le téléchargement des composants logiciels C1, C2, C3 pour l'utilisateur.

La première mémoire 22 est également apte à stocker un troisième moyen 82 de téléchargement du ou de chaque composant logiciel C1, C2, C3 dans la première mémoire 22 et depuis le troisième serveur de distribution S3. Le troisième moyen de téléchargement 82 est, par exemple, réalisé sous forme d'une fonction logicielle intégrée dans l'application de téléchargement 72, comme représenté sur la figure 1.

En variante, la deuxième application L2 forme le troisième moyen de téléchargement 82, la deuxième application L2 étant adaptée pour effectuer directement le téléchargement des composants logiciels C1, C2, C3 depuis le troisième serveur de distribution S3. Cette variante est préférentielle car elle permet de faciliter encore le téléchargement des composants logiciels C1, C2, C3 pour l'utilisateur.

La première mémoire 22 est également apte à stocker un fichier de déploiement 84 contenant des éléments de sécurité propres à l'utilisateur de l'appareil informatique 12 correspondant. Le fichier de déploiement 84 est codé dans un langage informatique susceptible d'être lu et décodé par la première application L1.

La deuxième mémoire 32 est apte à stocker la première application L1 en vue de son téléchargement dans la première mémoire 22 par le premier moyen de téléchargement 74.

La troisième mémoire 44 est apte à stocker un paquetage de données 86, également appelé lot de données (de l'anglais *bundle*), le paquetage de données 86 contenant notamment la deuxième application L2.

La quatrième mémoire 56 est apte à stocker une pluralité de composants logiciels C1, C2, C3,..., Cn destinés à être téléchargés de manière sécurisée dans la première mémoire 22 du ou de chaque appareil informatique 12.

La cinquième mémoire 70 est apte à stocker une application de déploiement 88 adaptée pour requérir auprès du deuxième serveur de distribution S2 la création d'un premier référentiel, non représenté, le premier référentiel étant propre à l'utilisateur de l'appareil informatique 12, et l'application de déploiement 88 étant adaptée pour envoyer au deuxième serveur de distribution S2 la deuxième application L2 en vue de son insertion dans le premier référentiel. L'application de déploiement 88 est également adaptée pour requérir auprès du troisième serveur de distribution S3 la création d'un deuxième référentiel, non représenté, le deuxième référentiel étant également propre à l'utilisateur de l'appareil informatique 12, et l'application de déploiement 88 est adaptée pour envoyer au troisième serveur de distribution S3 les composants logiciels C1, C2, C3,..., Cn en vue de leur insertion dans le deuxième référentiel.

Le fichier de déploiement 84 contient de préférence l'adresse D1 du deuxième serveur de distribution S2 et un code d'authentification D2 pour la connexion de manière sécurisée au deuxième moyen de distribution S2. En complément, le fichier de déploiement 84 contient un code de protection cryptographique D3 nécessaire à une opération cryptographique effectuée par la première application L1 afin d'extraire la deuxième application L2 du paquetage 86 reçu depuis le premier serveur de distribution S1. En complément encore, le fichier de déploiement 84 contient un code de déverrouillage D4 permettant le déverrouillage d'un conteneur logiciel de sécurité 92 reçu du deuxième serveur de distribution S2, le conteneur de sécurité comportant des informations nécessaires à la connexion de manière sécurisée au troisième serveur de distribution S3.

Chaque fichier de déploiement 84 est propre à un utilisateur donné, compte tenu des informations confidentielles que ledit fichier contient, et chaque fichier de déploiement 84 diffère d'un utilisateur à l'autre.

Le paquetage de données 86 est de préférence protégé de manière cryptographique, le code de protection cryptographique D3 étant alors nécessaire pour accéder aux informations contenues dans le paquetage de données 86 et extraire notamment la deuxième application L2. En complément, le paquetage de données 86 contient un fichier de configuration sécurisé 90 associé à la deuxième application L2. En complément encore, le paquetage de données 86 comporte le conteneur logiciel de sécurité 92.

Le conteneur de sécurité 92 comporte des éléments de sécurité associés à la protection cryptographique de données destinées à être échangées entre le troisième serveur de distribution S3 et l'appareil informatique 12 correspondant.

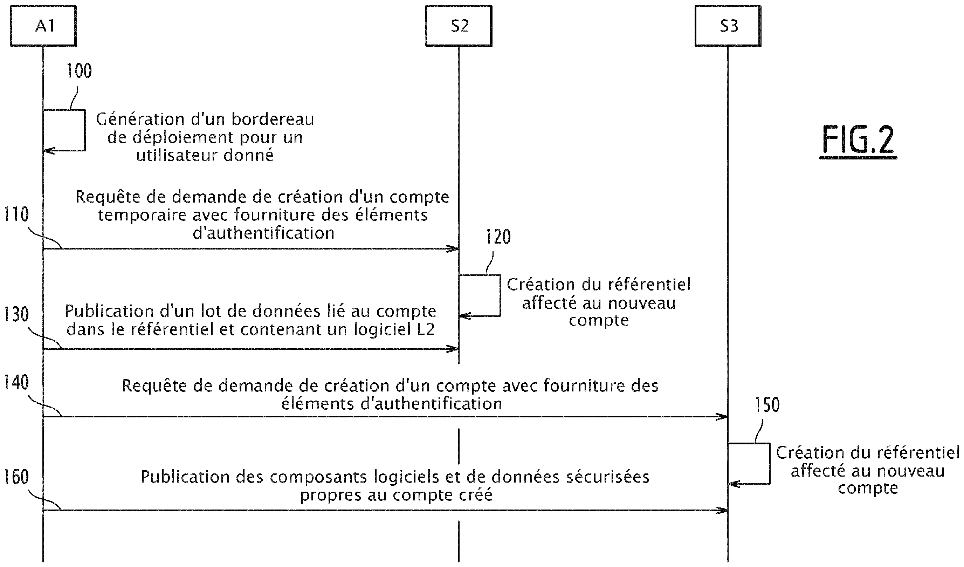

Le déploiement de la deuxième application L2 sur le deuxième serveur de distribution S2 avec la création du premier référentiel associé et des composants logiciels C1, C2, C3,..., Cn avec la création du deuxième référentiel associé va être à présent décrit à l'aide de l'organigramme de la figure 2.

Ce déploiement est effectué préalablement au procédé de téléchargement selon l'invention, et l'homme du métier comprendra que le procédé de déploiement décrit ci-après est un exemple de réalisation parmi d'autres permettant de stocker la deuxième application L2 dans le deuxième serveur de distribution S2, ainsi que les composants logiciels C1, C2, C3,..., Cn dans le troisième serveur de distribution S3, en vue du téléchargement ultérieur des composants C1, C2, C3,..., Cn de manière sécurisée dans la première mémoire 22 du ou de chaque appareil informatique 12.

Lors de l'étape initiale 100, l'application de déploiement 88 génère un bordereau pour un utilisateur donné, à savoir pour l'utilisateur du téléphone mobile 12 de la figure 1 dans l'exemple de réalisation décrit. Le bordereau est ensuite transmis à l'utilisateur, par exemple via un courriel ou encore sous forme papier, pour être lu ultérieurement par la première application L1 afin de récupérer l'adresse D1 du deuxième serveur de distribution, le code d'authentification D2, le code de protection cryptographique D3 et le code de déverrouillage D4 en vue de leur stockage dans la première mémoire 22 de l'appareil informatique 12 correspondant.

En variante, les informations D1, D2, D3 et D4 sont stockées directement dans la première mémoire 22 à une adresse prédéterminée, sans génération et utilisation du bordereau.

L'application de déploiement 88 requiert ensuite auprès du deuxième serveur de distribution S2, lors de l'étape 110, la création d'un premier compte pour l'utilisateur correspondant, par exemple un compte temporaire, tout en fournissant au deuxième serveur de distribution S2 le code d'authentification D2 devant être associé au premier compte temporaire à créer.

Suite à cette requête de l'application de déploiement 88, le deuxième serveur de distribution S2 créé, lors de l'étape 120, le premier référentiel, celui-ci étant affecté au premier compte temporaire créé pour ledit utilisateur.

Lors de l'étape 130, après la création du premier compte temporaire sur le deuxième serveur de distribution S2, l'application de déploiement 88 publie à destination du deuxième serveur de distribution S2 le paquetage de données 86, contenant notamment la deuxième application L2. Le paquetage de données 86 est alors intégré par le deuxième serveur de distribution S2 dans le premier référentiel précédemment créé.

L'application de déploiement 88 requiert ensuite auprès du troisième serveur de distribution S3, lors de l'étape 140, la création d'un deuxième compte pour le même utilisateur, tout en fournissant au troisième serveur de distribution S3 les éléments de sécurité contenus dans le conteneur de sécurité 92.

Suite à cette requête de l'application de déploiement 88, le troisième serveur de distribution S3 créé, lors de l'étape 150, le deuxième référentiel, celui-ci étant affecté au deuxième compte créé pour l'utilisateur.

Enfin, lors de l'étape 160, après la création du deuxième compte sur le troisième serveur de distribution S3, l'application de déploiement 88 publie à destination du troisième serveur de distribution S3 les composants logiciels C1, C2, C3,..., Cn. Les composants logiciels C1, C2, C3,..., Cn sont alors intégrés par le troisième serveur de distribution S3 dans le deuxième référentiel précédemment créé.

En complément, l'application de déploiement 88 publie des configurations sécurisées, chacune étant associée à un composant logiciel C1, C2, C3,..., Cn respectif. Le cas échéant, les configurations sécurisées sont également intégrées par le troisième serveur de distribution S3 dans le deuxième référentiel précédemment créé.

Ainsi, à l'issue de ce déploiement, le bordereau généré précédemment est transmis à l'utilisateur, ou bien les informations D1, D2, D3, D4 formant le fichier de déploiement 84 sont en variante directement stockées dans la première mémoire 22 à une adresse prédéterminée. Le paquetage de données 86 contenant notamment la deuxième application L2 est stocké dans la troisième mémoire 44. Les composants logiciels C1, C2, C3,..., Cn, ainsi qu'éventuellement les configurations sécurisées associées, sont stockés dans la quatrième mémoire 56. La première application L1 est par ailleurs stockée dans la deuxième mémoire 32 du premier serveur de distribution S1, celui-ci étant d'accès public. Le système informatique 10 selon l'invention est alors configuré pour permettre le téléchargement des composants logiciels C1, C2, C3,..., Cn dans la première mémoire 22 selon l'invention.

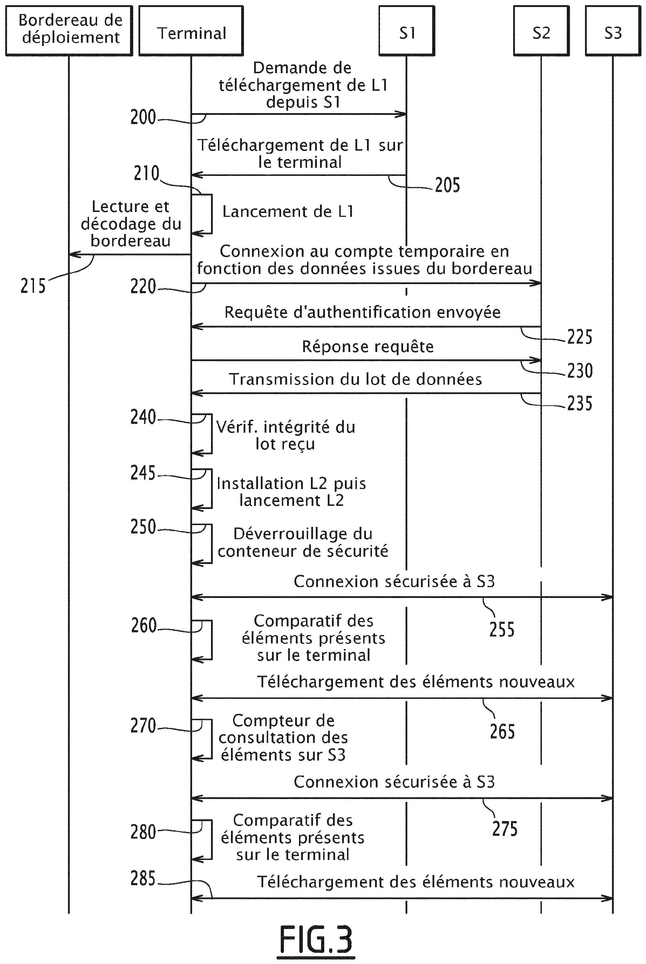

Le procédé de téléchargement du ou des composants logiciels C1, C2, C3,..., Cn dans la première mémoire 22 de l'appareil informatique 12 va être à présent décrit à l'aide de l'organigramme de la figure 3.

Lors de l'étape initiale 200, l'utilisateur de l'appareil informatique 12, également appelé terminal, effectue une demande de téléchargement de la première application L1 auprès du premier serveur de distribution S1. La procédure de connexion au premier serveur de distribution S1 en vue du téléchargement de la première application L1 est, par exemple, décrite dans le courriel ayant servi à transmettre à l'utilisateur son bordereau.

La première application L1 est alors téléchargée lors de l'étape 205 à l'aide du premier moyen de téléchargement 74 dans la première mémoire 22 du terminal.

La première application L1 est alors lancée par l'utilisateur lors de l'étape 210. Afin de stocker dans la première mémoire 22 l'adresse D1 du deuxième serveur de distribution, le code d'authentification D2, le code de protection cryptographique D3 et le code de déverrouillage D4, formant le fichier de déploiement 84, l'utilisateur scanne, à l'aide de la première application L1, un code informatique, tel qu'un code à barres ou encore un code matriciel à deux dimensions, également appelé code QR (de l'anglais *Quick Response code*), présent sur le bordereau. La première application L1 est alors apte à décoder le code informatique précédemment scanné afin de récupérer lesdites informations D1, D2, D, D4 formant le fichier de déploiement 84 et de les stocker dans la première mémoire 22. En variante, le fichier de déploiement 84 est stocké à une adresse prédéterminée de la première mémoire 22, ladite adresse prédéterminée étant connue de la première application L1.

Lors de l'étape suivante 215, la première application L1 récupère alors, dans le fichier de déploiement 84, l'adresse D1 du deuxième serveur de distribution S2 et le code d'authentification D2 pour la connexion de manière sécurisée au deuxième moyen de distribution S2.

La première application L1 se connecte alors, lors de l'étape 220, au deuxième serveur de distribution S2 en l'utilisant l'adresse D1, puis demande à ouvrir une session sur le premier compte temporaire associé à l'utilisateur, tout en fournissant le code d'authentification D2.

Suite à cette demande d'ouverture de session, le deuxième serveur de distribution S2 envoie lors de l'étape 225 une requête d'authentification au terminal 12. La requête d'authentification envoyée par le deuxième serveur de distribution S2 nécessite, par exemple, l'action d'un humain pour générer la réponse, telle que la fourniture par l'utilisateur d'une réponse à un test de défi-réponse, également appelé captcha (de l'anglais *completely automated public Turing test to tell computers and humans apart*). Ceci permet de différencier de manière automatique un humain d'un programme informatique, et permet ainsi une protection contre une intrusion d'une personne non autorisée via une attaque en force brute.

Suite à l'intervention de l'utilisateur pour répondre au test de défi-réponse, le terminal 12 envoie lors de l'étape 230 une réponse à la requête d'authentification émise par le deuxième serveur de distribution S2, et le deuxième serveur de distribution S2 ouvre la session sur le premier compte temporaire suite à la réception de la réponse à sa requête d'authentification.

En variante, le deuxième serveur de distribution S2 n'envoie pas de requête d'authentification au terminal 12, et ouvre directement une session sur le premier compte temporaire suite à la fourniture du code d'authentification D2. Autrement dit, les étapes 225 et 230 ne sont pas effectuées selon cette variante.

Après l'ouverture de la session sur le premier compte temporaire de l'utilisateur, le deuxième serveur de distribution S2 transmet, lors de l'étape 235, le paquetage de données 86 au terminal 12.

Lors de l'étape suivante 240, la première application L1 enregistre alors le paquetage de données 86 reçu dans la première mémoire 22 du terminal, et extrait dudit paquetage de données 86 la deuxième application L2. En complément, la première application L1 vérifie l'intégrité de la deuxième application L2 extraite du paquetage de données 86 reçu. Cette vérification consiste, par exemple, en une opération cryptographique, à l'aide du code de protection cryptographique D3, sur la deuxième application L2, celle-ci étant protégée de manière cryptographique.

En complément lorsque le paquetage de données 86 comprend également un fichier de configuration sécurisée 90 et/ou un conteneur de sécurité 92, la première application L1 extrait dudit paquetage de données 86 le fichier de configuration sécurisée 90 et/ou le conteneur de sécurité 92.

Si l'opération de vérification cryptographique de la deuxième application L2 a réussi, alors la première application L1 installe, lors de l'étape 245, la deuxième application L2 dans la première mémoire 22 du terminal. En complément, la première application L1 copie le fichier de configuration sécurisée 90 et/ou le conteneur de sécurité 92 dans un répertoire de la première mémoire 22 accessible par la deuxième application L2. La première application L1 lance ensuite la deuxième application L2, et lui transmet le code D4 de déverrouillage du conteneur de sécurité 92 si ledit conteneur était présent dans le paquetage de données 86 reçu.

En variante, si le conteneur de sécurité 92 n'est pas présent dans le paquetage de données 86 reçu, ledit conteneur est, par exemple déjà présent dans la première mémoire 22 du terminal, et par conséquent déjà déverrouillé.

La deuxième application L2 déverrouille ensuite, lors de l'étape 250, le conteneur de sécurité 92 afin de récupérer les éléments de sécurité, tels que des clés ou encore un certificat, nécessaires à la connexion sécurisée avec le troisième serveur de distribution S3. Autrement dit, les éléments de sécurité extraits du conteneur de sécurité 92 sont associés à la protection cryptographique des données destinées à être échangées entre le troisième serveur de distribution S3 et le terminal 12.

La deuxième application L2 et le troisième serveur de distribution S3 s'authentifient alors mutuellement, lors de l'étape 255, à l'aide des éléments de sécurité issus du conteneur de sécurité 92, afin d'établir ensuite entre eux une communication protégée de manière cryptographique. L'authentification mutuelle est une authentification réciproque du terminal 12 auprès du troisième serveur de distribution S3 et du troisième serveur de distribution S3 auprès du terminal 12. Autrement dit, l'authentification mutuelle comporte l'authentification de l'appareil informatique 12 auprès du troisième moyen de distribution S3 et l'authentification du troisième moyen de distribution S3 auprès de l'appareil informatique 12. La deuxième application L2 authentifie l'utilisateur du terminal 12 auprès du troisième serveur de distribution S3, par exemple avec un autre code d'authentification D5.

Lorsque le paquetage de données 86 comprend à la fois le fichier de configuration sécurisée 90 et le conteneur de sécurité 92, les informations permettant à la deuxième application L2 d'authentifier le terminal 12 auprès du troisième serveur de distribution S3 sont contenues dans le fichier de configuration sécurisée 90. Les informations contenues dans le fichier de configuration 90 sont notamment l'adresse du troisième serveur de distribution S3 et une méthode de connexion au troisième serveur de distribution S3. Le fichier de configuration 90 est lui-même protégé cryptographiquement avec une clé contenue dans le conteneur de sécurité 92, ledit conteneur de sécurité 92 étant déverrouillable à l'aide du code de déverrouillage D4. Les éléments de sécurité, également appelé éléments secrets, associés à la protection cryptographique des données destinées à être échangées entre le troisième serveur de distribution S3 et le terminal 12, sont également contenus dans le conteneur de sécurité 92.

Lors de l'étape 260, à l'issue de l'authentification mutuelle entre le terminal 12 et le troisième serveur de distribution S3, la deuxième application L2 se connecte automatiquement avec le troisième serveur de distribution S3 afin de récupérer la liste des composants logiciels C1, C2, ..., Cn présents dans la quatrième mémoire 56. La deuxième application L2 compare alors la liste fournie par le troisième serveur de distribution S3 avec les composants logiciels déjà présents dans la première mémoire 22 du terminal, afin de ne télécharger que les éléments nouveaux par rapport à ceux déjà présents dans la première mémoire 22.

En complément, la quatrième mémoire 56 du troisième serveur de distribution est également apte à stocker des fichiers de configuration sécurisée associés aux composants logiciels, ainsi qu'une mise à jour éventuelle du conteneur de sécurité 92. Le cas échéant, lesdits fichiers de configuration et la mise à jour du conteneur de sécurité 92 sont également mentionnés dans la liste communiquée par le troisième serveur de distribution S3 à la deuxième application L2.

La deuxième application L2 télécharge ensuite, lors de l'étape 265, lesdits éléments nouveaux par rapport à ceux déjà présents dans la première mémoire 22. La deuxième application L2 installe également de manière automatique les composants logiciels C1, C2, ..., Cn à l'issue de leur téléchargement, ou bien les met à jour.

La deuxième application L2 renseigne enfin, lors de l'étape 270, un compteur de consultation des éléments présents dans la quatrième mémoire 56 du troisième serveur de distribution, ainsi que des éléments téléchargés dans la première mémoire 22 du terminal depuis le troisième serveur de distribution S3. Ceci permet de réitérer plus facilement une comparaison ultérieure de la liste fournie par le troisième serveur de distribution S3 avec les éléments présents dans la première mémoire 22.

La deuxième application L2 se connecte en effet régulièrement de manière sécurisée au troisième serveur de distribution S3 (étape 275), pour comparer à nouveau les éléments présents dans la quatrième mémoire 56 du troisième serveur de distribution avec ceux stockés dans la première mémoire 22 du terminal (étape 280), et télécharger, le cas échéant, les éléments nouveaux par rapport à ceux déjà présents dans la première mémoire 22 (étape 285). Les nouveaux éléments téléchargés depuis le troisième serveur de distribution S3 sont ensuite installés par la deuxième application L2, ou bien permettent une mise à jour de tout ou partie des éléments déjà présents dans la première mémoire 22 du terminal.

Le procédé de téléchargement selon l'invention permet ainsi de télécharger, dans la première mémoire 22 du terminal, le ou les composants logiciels C1, C2, ..., Cn avec un niveau de sécurité élevé de par le téléchargement de la deuxième application L2 dans la première mémoire 22 suite à une authentification sécurisée de la première application L1 auprès du deuxième serveur de distribution S2, et de par la connexion sécurisée ultérieure auprès du troisième serveur de distribution S3 via la deuxième application L2, afin de télécharger lesdits composants logiciels C1, C2, ..., Cn depuis le troisième serveur de distribution S3 dans la première mémoire 22 de l'appareil informatique.

Le procédé de téléchargement selon l'invention permet alors de contrer une pluralité de menaces connues, telles que l'usurpation d'identité, le vol d'informations sensibles, la compromission du système d'information de l'entreprise, l'indisponibilité du système d'information de l'entreprise, et le vol du savoir-faire. L'usurpation d'identité correspond au cas où une personne non autorisée parvient à installer une application non autorisée dans la mémoire du terminal. Le vol d'informations sensibles est la situation dans laquelle une personne non autorisée parvient à récupérer des informations sensibles de l'utilisateur lors de l'installation des composants logiciels. La compromission du système d'information de l'entreprise est le cas où une personne non autorisée s'introduit dans le système d'information de l'entreprise en exploitant une faille de la procédure de téléchargement des composants logiciels. L'indisponibilité du système d'information de l'entreprise est susceptible de survenir au travers des moyens mis en place pour le téléchargement des composants logiciels. Enfin, le vol du savoir-faire correspond au cas où les composants logiciels, destinés à être téléchargés dans la mémoire du terminal, sont interceptés par un utilisateur non autorisé lors de leur téléchargement, l'utilisateur non autorisé cherchant alors ensuite à obtenir le code source des composants logiciels interceptés via une rétro-analyse.

La protection contre des menaces du type usurpation d'identité ou vol d'informations sensibles est obtenue du fait que seule la deuxième application L2 est apte à se connecter au troisième serveur de distribution S3 pour télécharger les composants logiciels, l'accès à cette deuxième application L2 étant en outre sécurisé. En outre, cette connexion au troisième serveur de distribution S3 est de préférence effectuée à l'aide des éléments de sécurité, également appelés éléments secrets, lesdits éléments étant liés à chaque utilisateur et étant connus seulement de l'utilisateur. La protection contre des menaces telles que la compromission du système d'information de l'entreprise et l'indisponibilité du système d'information de l'entreprise est assurée de par la sécurisation forte de la connexion au troisième serveur de distribution S3, celui-ci étant destiné à être relié au système d'information d'entreprise souhaitant mettre en oeuvre le téléchargement desdits composants logiciels. Enfin, la protection contre le vol de savoir-faire résulte notamment de la transmission de manière sécurisée de la deuxième application L2 depuis le deuxième serveur de distribution S2 dans la première mémoire 22 de l'appareil informatique et de la transmission sécurisée des composants logiciels C1, C2, ..., Cn depuis le troisième serveur de distribution S3 dans la première mémoire 22.

En outre, le procédé de téléchargement selon l'invention permet de limiter le nombre d'actions de l'utilisateur de l'appareil informatique 12, nécessaires au téléchargement des composants logiciels C1, C2, ..., Cn dans la première mémoire 22 dudit appareil informatique. En effet, les seules actions nécessaires de l'utilisateur sont la demande de téléchargement de la première application L1 auprès du premier serveur de distribution S1 et le lancement de la première application L1 lorsque celle-ci a été téléchargée de la première mémoire 22, et de manière optionnelle la réponse au test de défi-réponse lorsqu'une requête d'authentification est envoyée par le deuxième serveur de distribution S2 à l'appareil informatique 12 afin d'augmenter encore le niveau de sécurité (étapes 225 et 230).

Le déploiement de la deuxième application L2 dans la troisième mémoire 44 du deuxième serveur de distribution et des composants logiciels C1, C2, ..., Cn dans la quatrième mémoire 56 du troisième serveur de distribution nécessite également un minimum d'actions du ou des opérateurs en charge de ce déploiement.

On conçoit ainsi que le procédé de téléchargement selon l'invention permet d'améliorer la sécurité du ou des composants logiciels, tout en facilitant la mise en oeuvre dudit téléchargement.

## Revendications

1. Procédé de téléchargement d'au moins un composant logiciel (C1, C2, ..., Cn) dans un appareil informatique (12), tel qu'un téléphone mobile, le procédé étant mis en oeuvre par l'appareil informatique (12) comprenant une unité de traitement d'informations (18) comportant une mémoire (22),
le procédé de téléchargement comprenant les étapes suivantes :
- le téléchargement (205) dans la mémoire (22) d'une première application (L1) depuis un premier moyen de distribution (S1),
- la connexion (220), via la première application (L1), à un deuxième moyen de distribution (S2),
le procédé de téléchargement étant **caractérisé en ce que** la connexion (220) au deuxième moyen de distribution (S2) est effectuée de manière sécurisée à l'aide d'un code d'authentification (D2), et
**en ce qu'**il comprend en outre les étapes suivantes :
- le téléchargement (235) dans la mémoire (22) d'une deuxième application (L2) depuis le deuxième moyen de distribution (S2),
- la connexion (255, 275), via la deuxième application (L2) et de manière sécurisée, à un troisième moyen de distribution (S3), et
- le téléchargement (265, 285) dans la mémoire (22) du ou de chaque composant logiciel (C1, C2, ..., Cn) depuis le troisième moyen de distribution (S3).

2. Procédé selon la revendication 1, dans lequel la deuxième application (L2) est encapsulée dans un paquetage (86) protégé par un code de protection cryptographique (D3), et lors du téléchargement (235) de la deuxième application (L2), ledit paquetage protégé (86) est envoyé depuis le deuxième moyen de distribution (S2) à destination l'appareil informatique (12).

3. Procédé selon la revendication 2, dans lequel, après le téléchargement (235) du paquetage (86) comportant la deuxième application (L2), la première application (L1) effectue une opération cryptographique à l'aide du code de protection cryptographique (D3) afin d'extraire du paquetage (86) la deuxième application (L2).

4. Procédé selon l'une quelconque des revendications précédentes, dans lequel, lors de la connexion (255, 275) au troisième moyen de distribution (S3) et/ou lors du téléchargement (265, 285) du ou de chaque composant logiciel (C1, C2, ..., Cn), les données échangées entre le troisième moyen de distribution (S3) et l'appareil informatique (12) sont protégées par une protection cryptographique.

5. Procédé selon les revendications 2 et 4 prises ensemble, dans lequel des éléments de sécurité associés à la protection cryptographique des données échangées entre le troisième moyen de distribution (S3) et l'appareil informatique (12) sont stockés dans un conteneur de sécurité (92), le conteneur de sécurité (92) étant protégé cryptographiquement par un code de déverrouillage (D4), et ledit conteneur (92) est encapsulé dans le paquetage protégé (86), reçu du deuxième moyen de distribution (S2).

6. Procédé selon la revendication 5, dans lequel le code d'authentification (D2), le code de protection cryptographique (D3) et le code de déverrouillage (D4) sont stockés dans la mémoire (22) de l'appareil informatique (12), préalablement au téléchargement (205) de la première application (L1).

7. Procédé selon l'une quelconque des revendications précédentes, dans lequel le téléchargement (235) de la deuxième application (L2) est effectué directement par la première application (L1).

8. Procédé selon l'une quelconque des revendications précédentes, dans lequel l'étape de connexion (255, 275) au troisième moyen de distribution (S3) comporte l'authentification de l'appareil informatique (12) auprès du troisième moyen de distribution (S3) et l'authentification du troisième moyen de distribution (S3) auprès de l'appareil informatique (12), afin d'effectuer une authentification mutuelle de l'appareil informatique (12) et du troisième moyen de distribution (S3).

9. Produit programme d'ordinateur comportant des instructions logicielles qui, lorsque mis en oeuvre par une unité de traitement d'informations (18) intégrée à un appareil informatique (12), met en oeuvre le procédé de téléchargement selon l'une quelconque des revendications précédentes.

10. Appareil informatique (12), tel qu'un téléphone mobile, comprenant une unité de traitement d'informations (18) comportant une mémoire (22), la mémoire (22) comportant une application (72) de téléchargement d'au moins un composant logiciel (C1, C2, ..., Cn),
l'application de téléchargement (72) comportant :
+ un premier moyen (74) de téléchargement d'une première application (L1) dans la mémoire (22) depuis un premier moyen de distribution (S1), la première application (L1) étant propre à se connecter à un deuxième moyen de distribution (S2),
**caractérisé en ce que** la première application (L1) est propre à se connecter au deuxième moyen de distribution (S2) de manière sécurisée à l'aide d'un code d'authentification (D2), et
**en ce que** la mémoire (22) est apte à stocker :
+ un deuxième moyen (78, L1) de téléchargement d'une deuxième application (L2) dans la mémoire (22) depuis le deuxième moyen de distribution (S2), la deuxième application (L2) étant propre à se connecter de manière sécurisée à un troisième moyen de distribution (S3), et
+ un troisième moyen (82, L2) de téléchargement du ou de chaque composant logiciel (C1, C2, ..., Cn) depuis le troisième moyen de distribution (S3) dans la mémoire (22).

11. Système informatique (10) comprenant au moins un appareil informatique (12), un premier moyen de distribution (S1), tel qu'un premier serveur, un deuxième moyen de distribution (S2), tel qu'un deuxième serveur, et un troisième moyen de distribution (S3), tel qu'un troisième serveur, chaque moyen de distribution (S1, S2, S3) étant relié au ou à chaque appareil informatique (12) par une liaison de données (36, 48, 60), **caractérisé en ce que** l'appareil informatique (12) est conforme à la revendication 10.

12. Système (10) selon la revendication 11, dans lequel le système (10) comprend en outre un moyen de déploiement (A1), tel qu'un serveur de déploiement, le moyen de déploiement (A1) étant propre à requérir auprès du deuxième moyen de distribution (S2) la création d'un premier référentiel et à envoyer au deuxième moyen de distribution (S2) la deuxième application (L2) en vue de son insertion dans le premier référentiel,
le moyen de déploiement (A1) étant propre à requérir auprès du troisième moyen de distribution (S3) la création d'un deuxième référentiel et à envoyer au troisième moyen de distribution (S3) le ou chaque composant logiciel (C1, C2, ..., Cn) en vue de son insertion dans le deuxième référentiel.

## Patentansprüche

1. Verfahren zum Herunterladen mindestens einer Softwarekomponente (C1, C2, Cn) in eine Computereinrichtung (12), wie beispielsweise ein Mobiltelefon, wobei das Verfahren von der Computereinrichtung (12) durchgeführt wird, die eine Informationsverarbeitungseinheit (18) mit einem Speicher (22) aufweist,
wobei das Herunterladeverfahren die folgenden Schritte aufweist:
- das Herunterladen (205) in den Speicher (22) einer ersten Anwendung (L1) von einem ersten Verteilungsmittel (S1),
- die Verbindung (220) über die erste Anwendung (L1) mit einem zweiten Verteilungsmittel (S2),
wobei das Verfahren zum Herunterladen **dadurch gekennzeichnet ist, dass** die Verbindung (220) zu dem zweiten Verteilungsmittel (S2) unter Verwendung eines Authentifizierungscodes (D2) sicher durchgeführt wird, und
**dadurch, dass** es ferner die folgenden Schritte aufweist:
- das Herunterladen (235) in den Speicher (22) einer zweiten Anwendung (L2) von dem zweiten Verteilungsmittel (S2),
- die Verbindung (255, 275) über die zweite Anwendung (L2) und auf sichere Art mit einem dritten Verteilungsmittel (S3), und
- das Herunterladen (265, 285) in den Speicher (22) der oder jeder Softwarekomponente (C1, C2, Cn) von dem dritten Verteilungsmittel (S3).

2. Verfahren nach Anspruch 1, wobei die zweite Anwendung (L2) in einem Paket (86) eingekapselt ist, das durch einen kryptografischen Schutzcode (D3) geschützt ist, und, wenn die zweite Anwendung (L2) heruntergeladen wird (235), das geschützte Paket (86) von dem zweiten Verteilungsmittel (S2) an die Computereinrichtung (12) gesendet wird.

3. Verfahren nach Anspruch 2, wobei nach dem Herunterladen (235) des Pakets (86), das die zweite Anwendung (L2) aufweist, die erste Anwendung (L1) eine kryptografische Operation unter Verwendung des kryptografischen Schutzcodes (D3) ausführt, um die zweite Anwendung (L2) aus dem Paket (86) zu extrahieren.

4. Verfahren nach einem der vorhergehenden Ansprüche, wobei während der Verbindung (255, 275) mit dem dritten Verteilungsmittel (S3) und/oder während des Herunterladens (265, 285) der oder jeder Softwarekomponente (C1, C2, ..., Cn) die zwischen der dritten Verteilungsmittel (S3) und der Computereinrichtung (12) ausgetauschten Daten durch einen kryptographischen Schutz geschützt sind.

5. Verfahren nach den Ansprüchen 2 und 4 zusammengenommen, wobei Sicherheitselemente, die mit dem kryptografischen Schutz der zwischen der dritten Verteilungsmittel (S3) und der Computereinrichtung (12) ausgetauschten Daten assoziiert sind, in einem Sicherheitscontainer (92) gespeichert sind, wobei der Sicherheitscontainer (92) durch einen Entsperrcode (D4) kryptografisch geschützt ist und der Container (92) in dem geschützten Paket (86) eingekapselt ist, das von der zweiten Verteilungsmittel (S2) empfangen wird.

6. Verfahren nach Anspruch 5, wobei der Authentifizierungscode (D2), der kryptografische Schutzcode (D3) und der Entsperrcode (D4) in dem Speicher (22) der Computereinrichtung (12) vor dem Herunterladen (205) der ersten Anwendung (L1) gespeichert werden.

7. Verfahren nach einem der vorhergehenden Ansprüche, wobei das Herunterladen (235) der zweiten Anwendung (L2) direkt von der ersten Anwendung (L1) durchgeführt wird.

8. Verfahren nach einem der vorhergehenden Ansprüche, wobei der Schritt des Verbindens (255, 275) mit dem dritten Verteilungsmittel (S3) die Authentifizierung der Computereinrichtung (12) bei dem dritten Verteilungsmittel (S3) und die Authentifizierung des dritten Verteilungsmittels (S3) bei der Computereinrichtung (12) aufweist, um eine gegenseitige Authentifizierung der Computereinrichtung (12) und des dritten Verteilungsmittels (S3) durchzuführen.

9. Computerprogrammprodukt mit Softwareanweisungen, die, wenn sie von einer in eine Computereinrichtung (12) integrierten Informationsverarbeitungseinheit (18) implementiert werden, das Herunterladenverfahren nach einem der vorhergehenden Ansprüche implementiert.

10. Computereinrichtung (12), wie beispielsweise ein Mobiltelefon, aufweisend eine Informationsverarbeitungseinheit (18) mit einem Speicher (22), wobei der Speicher (22) eine Anwendung (72) zum Herunterladen von mindestens einer Softwarekomponente (C1, C2, ..., Cn) aufweist, wobei die Anwendung zum Herunterladen (72) aufweist:
+ ein erstes Mittel (74) zum Herunterladen einer ersten Anwendung (L1) von einem ersten Verteilungsmittel (S1) in den Speicher (22), wobei die erste Anwendung (L1) geeignet ist, sich mit einem zweiten Verteilungsmittel (S2) zu verbinden, **dadurch gekennzeichnet, dass** die erste Anwendung (L1) dazu geeignet ist, sich mit dem zweiten Verteilungsmittel (S2) auf sichere Weise unter Verwendung eines Authentifizierungscodes (D2) zu verbinden und
**dadurch, dass** der Speicher (22) geeignet ist, zu speichern:
+ ein zweites Mittel (78, L1) zum Herunterladen einer zweiten Anwendung (L2) in dem Speicher (22) von dem zweiten Verteilungsmittel (S2), wobei die zweite Anwendung (L2) geeignet ist, sich auf sichere Art mit einer dritten Verteilungsmittel (S3) zu verbinden, und
+ einem dritten Mittel zum Herunterladen (82, L2) der oder jeder Softwarekomponente (C1, 02, Cn) von dem dritten Verteilungsmittel (S3) in den Speicher (22).

11. Computersystem (10) aufweisend mindestens eine Computereinrichtung (12), ein erstes Verteilungsmittel (S1), wie einen ersten Server, ein zweites Verteilungsmittel (S2), wie einen zweiten Server, und ein drittes Verteilungsmittel (S3), wie einen dritter Server, wobei jedes Verteilungsmittel (S1, S2, S3) über eine Datenverbindung (36, 48, 60) mit der oder jeder Computereinrichtung (12) verbunden ist, **dadurch charakterisiert, dass** die Computereinrichtung (12) konform mit Anspruch 10 ist.

12. System (10) nach Anspruch 11, wobei das System (10) ferner eine Bereitstellungseinrichtung (A1), wie einen Bereitstellungsserver, aufweist, wobei die Bereitstellungseinrichtung (A1) geeignet ist, von dem zweiten Verteilungsmittel (S2) die Erzeugung eines ersten Referenzsystems anzufordern und die zweite Anwendung (L2) an das zweite Verteilungsmittel (S2) zum Einfügen in das erste Referenzsystem zu senden,
wobei das Bereitstellungsmittel (A1) geeignet ist, von dem dritten Verteilungsmittel (S3) die Erzeugung eines zweiten Referenzsystems anzufordern und die oder jede Softwarekomponente (C1, 02, Cn) zum Einfügen in das zweite Referenzsystem an das dritte Verteilungsmittel (S3) zu senden.

## Claims

1. Method for downloading at least one software component (C1, C2, ..., Cn) to a computer apparatus (12), such as a mobile phone, the method being implemented by the computer apparatus (12) comprising an information processing unit (18) having a memory (22),
the downloading method comprising the following steps:
- downloading (205) to the memory (22) of a first application (L1) from a first distribution means (S1),
- connection (220) via the first application (L1) to a second distribution means (S2),
the downloading method being **characterized in that** the connection (220) to the second distribution means (S2) is performed securely using an authentication code (D2), and
**in that** the downloading method further comprises the following steps:
- downloading (235) to the memory (22) of a second application (L2) from the second distribution means (S2),
- secure connection (255, 275), via the second application (L2) to a third distribution means (S3), and
- downloading (265, 285) to the memory (22) of the software component(s) (C1, C2, ..., Cn) from the third distribution means (S3).

2. Method according to claim 1, wherein the second application (L2) is encapsulated in a package (86) protected by a cryptographic protection code (D3), and, during downloading (235) of the second application (L2), said protected package (86) is sent from the second distribution means (S2) to the computer apparatus (12).

3. Method according to claim 2, wherein after downloading (235) of the package (86) comprising the second application (L2), the first application (L1) performs a cryptographic operation using the cryptographic protection code (D3) to extract the second application (L2) from the package (86).

4. Method according to any one of the preceding claims, wherein, during the connection (255, 275) to the third distribution means (S3) and/or the downloading (265, 285) of each software component (C1, C2, ..., Cn), the data exchanged between the third distribution means (S3) and the computer apparatus (12) are protected by cryptographic protection.

5. Method according to claims 2 and 4 taken together, wherein the security elements associated with the cryptographic protection of the data exchanged between the third distribution means (S3) and the computer apparatus (12) are stored in a security container (92), the security container (92) being cryptographically protected by an unlock code (D4) and said container (92) is encapsulated in the protected package (86) received from the second distribution means (S2).

6. Method according to claim 5, wherein the authentication code (D2), the cryptographic protection code (D3) and the unlock code (D4) are stored in the memory (22) of the computer apparatus (12) prior to the downloading (205) of the first application (L1).

7. Method according to any one of the preceding claims, wherein the downloading (235) of the second application (L2) is carried out directly by the first application (L1).

8. Method according to any one of the preceding claims, wherein the connecting step (255, 275) to the third distribution means (S3) includes authentication of the computer apparatus (12) at the third distribution means (S3) and authentication of the third distribution means (S3) at the computer apparatus (12) in order to perform reciprocal authentication of the computer apparatus (12) and the third distribution means (S3).

9. Computer program product comprising software instructions that, when implemented by an information processing unit (18) integrated with a computer apparatus (12), implements the downloading method according to any one of the preceding claims.

10. Computer apparatus (12), such as a mobile phone, comprising an information processing unit (18) having a memory (22), the memory (22) having a downloading application (72) for downloading at least one software component (C1, C2, ..., Cn),
the downloading application (72) comprising:
+ a first means (74) for downloading a first application (L1) to the memory (22) from a first distribution means (S1), the first application (L1) being able to connect to a second distribution means (S2),
**characterized in that** the first application (L1) is adapted to connect to the second distribution means (S2) in a secure manner using an authentication code (D2), and
**in that** the memory (22) is able to store:
+ a second means (78, L1) for downloading a second application (L2) to the memory (22) from the second distribution means (S2), the second application (L2) being able to connect securely to a third distribution means (S3), and
+ a third means (82, L2) for downloading each software component (C1, C2, ..., Cn) from the third distribution means (S3) to the memory (22).

11. Computer system (10) comprising at least one computer apparatus (12), a first distribution means (S1), such as a first server, a second distribution means (S2), such as a second server, and a third distribution means (S3), such as a third server, each distribution means (S1, S2, S3) being connected to each computer apparatus (12) by a data link (36, 48, 60), **characterized in that** the computer apparatus (12) is in accordance with claim 10.

12. Computer system (10) according to claim 11, wherein the system (10) further comprises a deployment means (A1) such as a deployment server, the deployment means (A1) being able to request from the second distribution means (S2) the creation of a first repository, and to send to the second distribution means (S2) the second application (L2) for insertion into the first repository,
the deployment means (A1) being able to request from the third distribution means (S3), the creation of a second repository and to send to the third distribution means (S3) each software component (C1, C2, ..., Cn) for inclusion in the second repository.
